# EUROPEAN PATENT APPLICATION

(11) **EP 1 736 724 A1**
(43) Date of publication of application: **27.12.2006**
(21) Application number: 05105637.2
(22) Date of filing: 23.06.2005
(51) Int. Cl.: F25D 25/02, A47F 3/04, A47F 3/10

(54) **Refrigerator with inner shelf carriage and turning device**

(71) Applicant: Enjoy Group AB, 840 60 Bräcke (SE)
(72) Inventor: Sjölander, Håkan, SE-840 12, Fränsta (SE); Andersen, John, NO-1605, Fredrikstad (NO)
(74) Representative: Skagersten, Thomas

(57) **Abstract**

The present invention relates to a refrigerator, comprising an outer cabinet (2) and an inner shelf carriage (9) supporting a plurality of shelves (11) and being movably arranged between a display position, where the shelves are accessible from a front side (8) of the shelf carriage, a refill position, where the shelves are accessible from a rear side of the shelf carriage, and an intermediate position. The refrigerator comprises further a turning guide cooperating with the shelf carriage. The shelf carriage is at least substantially inside of the outer cabinet in the display position and at least substantially outside of and disconnected from the outer cabinet in the refill position and in the intermediate position. The shelf carriage is arranged for turning motion between the intermediate position and the refill position. The turning guide is adapted to guide the turning motion of the shelf carriage between the intermediate position and the refill position.

## Description

### Technical field of the invention

The invention generally relates to refrigerators, and more specifically to refrigerators with an outer cabinet and an inner shelf carriage being movably arranged between a display position, where the shelves are accessible from a front side of the shelf carriage, a refill position, where the shelves are accessible from a rear side of the shelf carriage, and an intermediate position.

### Background art

In stores, refrigerators are typically used for storing, cooling, down to temperatures above as well as below the freezing-point, and displaying items of merchandise to the customers. Examples of merchandise in such a refrigerator are cans and bottles of drink, snuff boxes, cartons with dairies or juices etc. Since this type of merchandise generally has expiry dates, it is desirable to have the oldest items in the front of the shelves, thereby making the oldest items sell first and lowering the risk that items are sold after their expiry dates. When the refrigerator is to be filled with new items, it is therefore desirable to fill the new items from the back of the shelves.

In prior art, access to the rear side of the shelves has e.g. been facilitated by making the interior part of the refrigerator extractable. That is, the shelves have been arranged on a carriage supplied with wheels, the shelf carriage being extractable from the outer cabinet. When the shelf carriage is extracted from the outer cabinet the shelves can be refilled from the rear side, after which the shelf carriage can be reinserted into the outer cabinet.

A problem with this is that the fully loaded shelf carriages can be very heavy. The shop assistants find it hard to manouvre the heavy shelf carriage back into the outer cabinet.

Hence, there is a need for a refrigerator with a shelf carriage that is easier to handle in the process of loading.

### Summary of the invention

It is therefore an object of the present invention to provide a refrigerator which alleviates the above-mentioned problems.

According to the invention, this object is achieved by the refrigerator according to claim 1.

The present invention relates to a refrigerator, comprising an outer cabinet and an inner shelf carriage supporting a plurality of shelves and being movably arranged between a display position, where the shelves are accessible from a front side of the shelf carriage, a refill position, where the shelves are accessible from a rear side of the shelf carriage, and an intermediate position. The refrigerator further comprises a turning guide cooperating with the shelf carriage. The shelf carriage is at least substantially inside of the outer cabinet in the display position and at least substantially outside of and disconnected from the outer cabinet in the refill position and in the intermediate position. The shelf carriage is arranged for turning motion between the intermediate position and the refill position. The turning guide is adapted to guide the turning motion of the shelf carriage between the intermediate position and the refill position.

It is fairly easy to pull a shelf carriage in and out of an outer cabinet along an approximately linear path. Since the space in a shop isle is limited, it is usually not possible to pull the shelf carriage along the linear path a distance sufficiently long for giving comfortable access the rear side of the shelf carriage. Therefore, the shop attendant has to turn the shelf carriage after having pulled it clear of the outer cabinet. In the prior art, it has proven to be this turning motion that displaces the shelf carriage in such a way that it is difficult to find the position where the shelf carriage is aligned for being pushed back to the display position inside of the outer cabinet.

Thus, the shelf carriage according to the invention includes a turning guide for guiding the turning motion of the shelf carriage after it has been pulled clear of the outer cabinet. The shelf carriage is movably arranged between a display position, where it is essentially inside of the outer cabinet and an intermediate position where it is essentially outside of the outer cabinet. In the intermediate position, the shelf carriage is clear of and disconnected from the outer cabinet such that turning of the shelf carriage is enabled, but the shelf carriage is still correctly aligned for easily being moved back into the outer cabinet. From the intermediate position, the shelf carriage can be turned a suitable angle such that unrestricted access to the rear side of the shelves are achieved.

According to the invention, the shelf carriage can be movably arranged along a linear path between the display position inside of the outer cabinet and the intermediate position outside the outer cabinet. Depending on the shape of and the relationship between the dimensions of the outer cabinet and the shelf carriage, also other paths of movement are possible, for example a curved path or successive linear translations in different directions. According to one embodiment of the invention, the shelf carriage is movably arranged along a linear path aligned in a direction normal to a front side of the outer cabinet. In other words, the shelf carriage is movable straight forwards and backwards in respectively out of the outer cabinet.

The refrigerator according to the invention is intended to rest on a floor such as a shop floor, a base or the like. The outer cabinet surrounds the shelf carriage such that the shelf carriage can be refrigerated inside the cabinet. The outer cabinet has isolated walls and an isolated top. Normally the outer cabinet will also have an isolating bottom, but it is also possible to use only a thin bottom plate or to use an outer cabinet with open bottom. In that case, the shelf carriage will rest on the floor also when it is inside the outer cabinet. The cabinet may have one or more doors at the front side, but can also be open or have other arrangements such as a curtain.

By "shelf carriage" is meant a movable rack or frame having a plurality of shelves. Thus, it should be noted that within the scope of this invention the term carriage does not necessarily demand the presence of wheels, although in many embodiments the presence of wheels on the shelf carriage is preferred. In the rack, the shelves can be arranged sloping such that the items stored on the shelves, after an item has been removed, will slide forwards towards the costumer in the display position. In the refill position, the empty space on the shelves will face the refilling shop attendant. The shelves can also be provided with pushers for pushing the displayed items towards the front side of the shelf carriage.

The outer dimensions of the shelf carriage are less than the inner dimensions of the outer cabinet such that the shelf carriage will fit inside of the outer cabinet. Normally, the cross section of the shelf carriage and of the outer cabinet will have essentially the same shape, though differ in size. However, the invention is limited to refrigerators where it is not possible to rotate the shelf carriage inside of the outer cabinet for accessing the rear side of the shelves.

The shelf carriage can be provided with wheels or a low friction surface for facilitating movement thereof.

By "display position" is meant the ordinary position wherein the goods are displayed and sold. By "refill position" is meant a position wherein the shelf carriage is refilled from the rear side.

According to the invention, the turning guide can be permanently connected to the shelf carriage or only during the turning motion between the intermediate position and the refill position. It may be sufficient that the turning guide abuts against the shelf carriage for guiding it during tuning.

The turning guide can be mounted on a shop floor, a shop wall or the like, or on an adjacent shelf rack. It is also possible to mount the guide on a separate detail of the refrigerator as will be described more in detail below.

According to the invention, the turning guide can be arranged to guide the shelf carriage in a curved or semicircular path, or to rotate around an axis. The axis of rotation can be a peripheral axis or a central axis of the shelf carriage. In use, the axis of rotation is an essentially vertical axis.

According to one embodiment of the invention, the shelf carriage and the outer cabinet has a rectangular cross section. The shelf carriage is fitted in the outer cabinet with a clearance adequate to just allow the shelf carriage to be moved in and out of the outer cabinet. Consequently, the shelf carriage can not be rotated inside of the outer cabinet. When the shelf carriage is moved out of the outer cabinet, i.e. moved from the display position to the intermediate position, it is translated along a linear path guided by the walls of the outer cabinet.

According to one embodiment of the invention, the shelf carriage is arranged for being translated along a path extending in a direction normal to the front side of the outer cabinet when it is moved between the display position and the intermediate position. In other words, the shelf carriage is pulled or pushed forward or backwards in respectively out of the outer cabinet.

According to one embodiment of the invention, the turning guide is connected with the shelf carriage in all the positions of the shelf carriage. In other embodiments, the turning guide acts on the shelf carriage only during the turning motion.

According to one embodiment, the refrigerator includes a guide plate which carries and supports the shelf carriage. Consequently, the guide plate has shelf carriage facing side and a floor facing side. At the shelf carriage facing side, the guide plate is rotatably connected with the shelf carriage such that the rotation of the shelf carriage is defined and guided by the guide plate. The shelf carriage is moved together with the guide plate when the shelf carriage is moved between the display position and the intermediate position, and rotated relative the guide plate when the shelf carriage is moved between the intermediate position and the refill position.

According to one embodiment of the invention, the shelf carriage is rotatable around and guided by a centre axle of the guide plate. When the guide plate is extracted from the outer cabinet, the walls of the outer cabinet do not restrain the rotation such that the shelf carriage can be positioned to offer easy access to the rear side of the shelves while still being centred over the guide plate.

The guide plate can be provided with wheels or a low friction surface on a floor facing side thereof for facilitating movement thereof.

### Brief description of the drawings

In the following, the embodiments of the invention will be described in detail with reference to the enclosed drawings, in which:
Figure 1 is a perspective view of a first embodiment of the refrigerator according to the invention, in the intermediate position;
Figure 2 is a perspective view of the first embodiment, in a position between the intermediate position and the refill position;
Figure 3 is an exploded view of a guide plate and part of a shelf carriage according to the first embodiment;
Figure 4 is schematic, perspective view of a second embodiment of the invention; and
Figure 5 is schematic, perspective view of a third embodiment of the invention.

### Detailed description of preferred embodiments of the invention

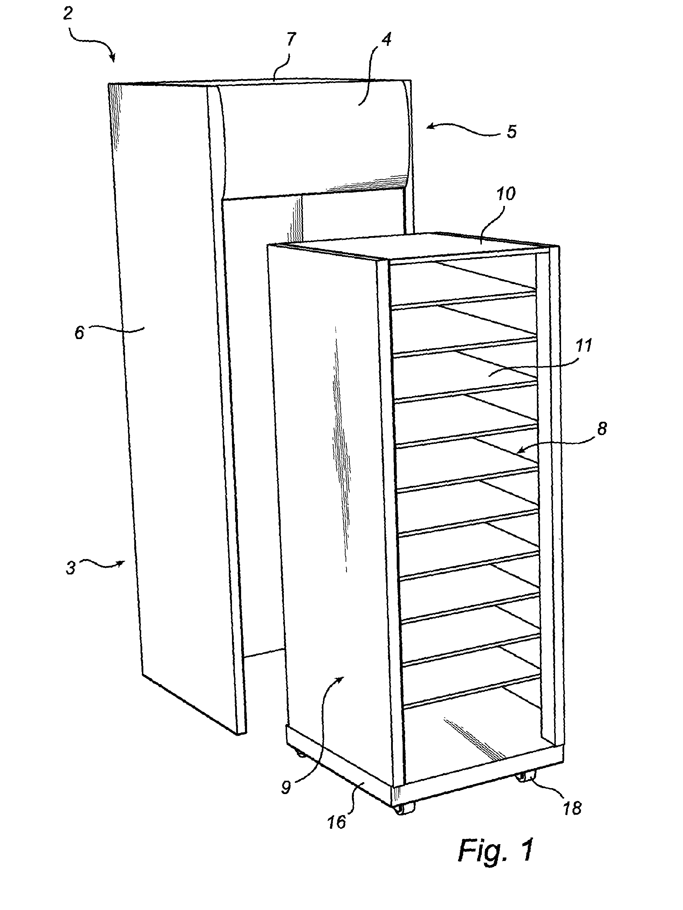

With reference to Figures 1 - 3, a refrigerator according to a first embodiment of the invention is shown. The refrigerator comprises an outer cabinet 2 with a rear side 3, a front side 4, a right side 5, a left side 6, a top 7 and an open bottom. The cabinet 2 surrounds a shelf carriage 9 comprising a frame 10, shelves 11 and a bottom plate 12. The shelf carriage has an open front side 8, an open rear side, a closed left side and a closed right side.

The refrigerator exposes refrigerated merchandise (not shown) to customers. The cabinet 2 is refrigerated in a customary way. The shelf carriage 9 supports a plurality of sloping shelves 11.The refrigerator is usually arranged such that the rear side 3 faces a wall and the front side 4 faces an isle. When the shelf carriage 9 is situated completely inside of the outer cabinet 2 in the display position, any displayed items of merchandise on the shelves 11 are accessible for the consumers through the open front side 4 of the outer cabinet 2 and the open front side 8 of the shelf carriage 9. Since the shelves 11 are sloping toward the isle in the display position, the items of merchandise will always be stacked beginning at the front side 4 and any empty space on the shelves will be located at the rear part of the shelves 11.

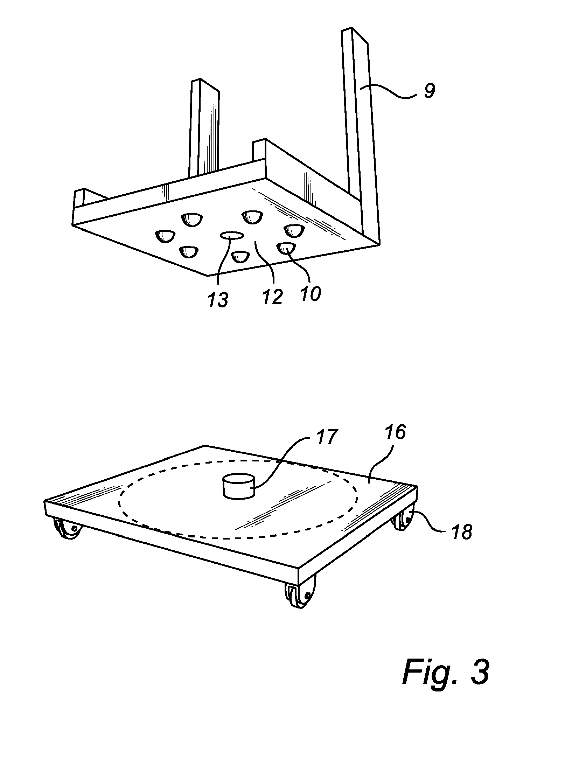

In Figure 3, a detail of the first embodiment of the refrigerator according to the invention is schematically shown in an exploded view. In figure 3, only the lower part of the shelf carriage 2 is shown and the shelves 11 thereof and the outer cabinet 2 are not shown. The shelf carriage 2 has a rectangular bottom plate 12 provided with a circular, pivotal bearing 13 at the centre thereof. The bottom plate 12 is furthermore provided with spherical balls 15 functioning as a bearing arrangement. A rectangular guide plate 16 is, at the centre thereof, provided with a turning guide in form of a fixed axle 17 adapted to fit into the pivotal bearing 13. Furthermore, the guide plate 16 is provided with four non-pivoting wheels 18, one in each corner.

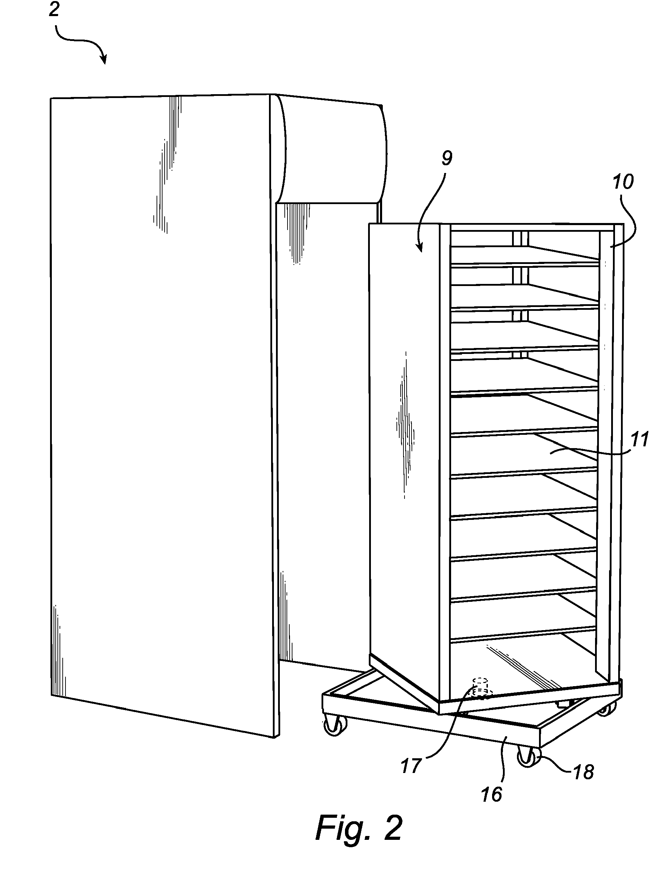

In Figures 1 and 2, an assembled refrigerator is shown. The shelf carriage 9 is mounted on the guide plate 16 with the axle 17 received in the bearing 13. Thus, in this embodiment of the invention, the turning guide 17 is connected with the shelf carriage 9 in all positions thereof. Furthermore, the shelf carriage 9 is in all positions thereof located centrally over the guide plate 16. In the display position and the intermediate position, the bottom plate 12 of the shelf carriage 9 is aligned and interposed with the guide plate 16.

The outer cabinet 2 has a rectangular open bottom which is slightly larger than the rectangular guide plate 16. The dimensions of the shelf carriage 9 mounted on the guide plate 16 are such that the shelf carriage and the guide plate 16 fit inside of the cabinet 2 with sufficient clearance for allowing the shelf carriage 9 with the guide plate 16 to be moved in and out of the outer cabinet 2.

The refrigerator according to the described first embodiment functions in the following way.

When the shelf carriage is in the display position, consumers can easily pick items of merchandise from the front end of the sloping shelves 11. The rear side of the shelf carriage faces the rear wall 3 of the outer cabinet 2. When the stack of items on the shelves 11 has decreased such that refilling of the shelves 11 is needed, a shop attendant pulls the shelf carriage 9, together with the guide plate 16 carrying the shelf carriage 9, linearly out of the outer cabinet 2 in a direction essentially normal to the front side 4 of the outer cabinet 2. This linear translation of the shelf carriage 9 is guided by the outer sides of the shelf carriage 9 abutting against the inner side walls 5 and 6 of the outer cabinet 2. Since the four wheels 18 are non-pivoting and arranged to roll only along the linear path normal to the front side 4 of the outer cabinet 2, the wheels 18 do also assist in keeping the shelf carriage 9 aligned with the outer cabinet 2 during the motion out of the outer cabinet 2. In Figure 1, the shelf carriage 9 has been pulled completely out of the outer cabinet 2 and has reached the intermediate position. In this position, the shelf carriage 9 has no contact with the outer cabinet 2.

In the intermediate position, the shelf carriage 9 is not obstructed by the outer cabinet 2 and is free to be rotated any desired angle. Thus the shop attendant can choose any suitable angle for accessing the open rear side of the shelf carriage 9 for refilling of the shelves 11 from behind. When the shelf carriage 9 is turned to the selected position for refilling, the turning motion thereof is guided by the axle 17 cooperating with the bearing 13. The turning motion is facilitated by the ball bearings 15 located between the under side of the bottom plate 12 and the upper side of the guide plate 16. During the turning motion, the shelf carriage 1 rotates around a central axis. In the refill position, the available empty space on the shelves 11 will be located at the rear side of the shelves 11 facing the shop attendant. By refilling the shelves 11 from behind, the new items will be placed furthest away from the front edge of the shelves 11 in the stack on the shelves 11. Thereby it is ensured that the older items in the stack on the shelves 11 will be sold before the refilled items.

After the shop attendant has completed the refilling operation, the shelf carriage 9 is easily rotated back to the intermediate position guided by the axle 17 cooperating with the bearing 13 and assisted by the ball bearings 15. When the shelf carriage 9 is properly aligned in the intermediate position, it can easily be pushed back to the display position inside the outer cabinet 2, wherein the linear translation is assisted by the four wheels 18 being aligned in the appropriate direction. When the rear part of shelf carriage has been inserted between the side walls 5 and 6 of the outer cabinet 2, further translation to the display position is guided by guided by the side walls 5 and 6 abutting against the sides of the shelf carriage 9. Due to the clearance between the shelf carriage 9 and the inner walls of the outer cabinet 2, the shelf carriage will easily fit inside of the outer cabinet 2 and finally reach the display position again.

Since the shelf carriage 9 only has to be moved in a linear direction between the display position and the intermediate position, the shelf carriage 9 will be properly aligned in the intermediate position. Consequently, the display position is easy to find, once the shelf carriage is in the intermediate position.

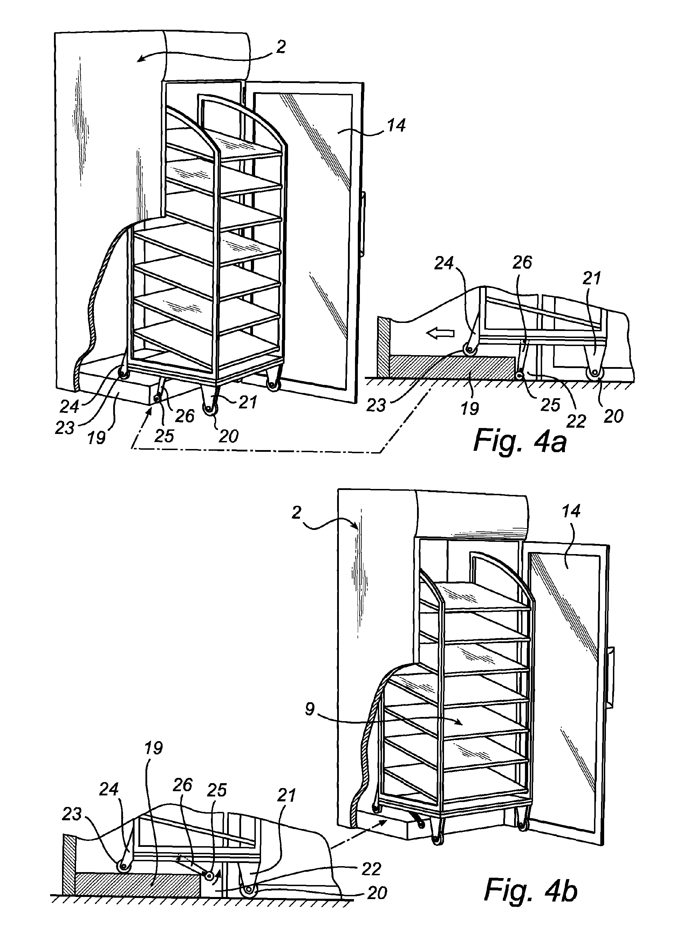

In Figure 4, a second embodiment of the refrigerator according to the invention is shown. In Figure 4, those parts that correspond to parts shown in Figures 1 - 3 are provided with the same reference numerals. The second embodiment differs from the first embodiment described with reference to Figures 1 - 3 in that the outer cabinet 2 includes a thick, isolated bottom plate 19 and that the front side 4 of the outer cabinet 2 is provided with a door 14. The bottom plate 19 does not extend over the whole bottom of the outer cabinet 2, a gap 22 is left between the bottom plate 19 and the door 14 when the door 14 is closed. The outer cabinet 2 according to the second embodiment has improved cooling properties compared to the outer cabinet 2 of the first embodiment.

Furthermore, the guide plate 16 of the second embodiment is provided with two front wheels 20. Each front wheel 20 is mounted to an end of a front arm 21, the other end of the front arm 21 being attached to the floor facing side of the guide plate 16. Two rear wheels 23 are attached to the guide plate 16 in a similar way by means of rear arms 24 of shorter length than the front arms 22. Finally, the guide plate 16 is provided with two adjustable intermediate wheels 25. Each adjustable wheel 25 is mounted to an end of an intermediate arm 26. The other end of the intermediate arm 26, is pivotally mounted to the floor facing side of the guide plate 16. The intermediate arm 26 is biased towards an extended, lockable end position.

The shelf carriage 9 is attached to the guide plate 16 in the same way as according to the first embodiment.

The refrigerator according to the described second embodiment functions in the following way.

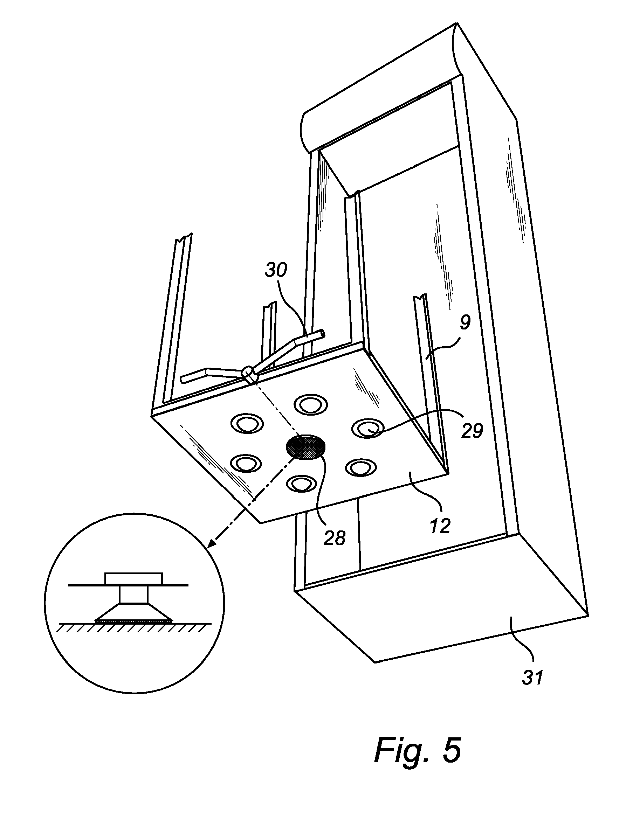

When the shelf carriage 9 is in the display position inside of the outer cabinet 2, the front wheels 20 will rest on the floor in the gap 22 supporting the shelf carriage 9. The rear wheels 23 rest on the bottom plate 19 also supporting the shelf carriage 9. The adjustable wheels 25 are in a retracted position and engage with the bottom plate 19 without contributing to the support of the shelf carriage 9. When the shelf carriage is pulled out of the outer cabinet to be refilled, the adjustable wheels will roll on the bottom plate 19 because they are biased against the extended position. As the shelf carriage 9 is moved further out of the outer cabinet 2, the adjustable wheels will roll over the rim of the bottom plate 19, wherein the intermediate arm 26 pivots until it reaches the lockable end position due to the effect of the biasing. In this extended position of the adjustable wheels 25, the adjustable wheels 25 engage with the floor for supporting the shelf carriage 9, cf. Figure 5a. When the shelf carriage 9 has been completely pulled out of the outer cabinet 2 to the intermediate position, the rear wheels 23 are not in contact with the bottom plate 19 and mounted too high to contact the floor. Thus, the rear wheels 23 do not contribute to the support of the shelf carriage 9 in the intermediate and the refill position.

The shelf carriage 9 can then be turned to the refill position and back again to the intermediate position in the same way as the first embodiment.

When the shelf carriage is to be moved back into the outer cabinet 2 to the display position, the rear wheels will contact the bottom plate 19 and again contribute to the support of the shelf carriage 9. After the shelf carriage has been moved further inside, the intermediate arm 26 will contact the rim of the bottom plate 19, which will force the intermediate arm 26 to pivot. Thereby the adjustable wheels 25 will resume their retracted position and slip over the rim of the bottom plate 19, cf. Figure 4b. Finally, the shelf carriage 9 is once again in the display position and the door 14 can be closed.

With reference to Figure 5, a third embodiment of the invention is described. In Figure 5, those parts that correspond to parts shown in Figures 1 - 4 are provided with the same reference numerals.

The refrigerator according to the third embodiment differs from the first and the second embodiments of the refrigerator in that it has no guide plate.

The refrigerator includes an outer cabinet 2 and a shelf carriage 9 supporting a plurality of sloping shelves (not shown). In the bottom plate 12 a turning guide in the form of an extendable axle 28 is arranged. Several ball wheels 29 are provided in the bottom plate 12. The axle is operable to move between a retracted position where it is not in contact with the floor and an extended position where it is in engagement with the floor by means of a lever 30. The under side of the axle, i.e. the side that engages with the floor, is provided with a frictional, elastic pad for enhancing the engagement properties. The outer cabinet 2 is provided with a thin bottom plate 31.

When the shelves of this shelf carriage 9 are to be refilled, a shop attendant pulls the carriage 9 out of the outer cabinet 2 carefully rolling it over the thin bottom plate 31 of the outer cabinet 2, wherein the carriage 9 travels on the ball wheels 29. When the shelf carriage 9 is in the intermediate position completely outside of and disconnected from the outer cabinet 2, the axle 28 is brought to its extended position such that the axle 28 engages with the floor and slightly lifts the shelf carriage 9. From the intermediate position, the shelf carriage 9 is easily turned to the refill position, wherein the turning motion is guided by the axle 28 and facilitated by the ball wheels 29 functioning as bearings. When the filling operation is finished, the shelf carriage 9 is rotated back to the intermediate position, the axle 28 is retracted and the shelf carriage 9 is rolled back to the display position inside the outer cabinet 2.

The axle mentioned in the embodiments can be arranged in various ways. For example, it can be arranged to be rotational in relation to the cabinet and fixed in relation to the carriage. Another one of the possible arrangements is to have the axle fixed in relation to the cabinet and rotational in relation to the carriage.

## Claims

1. A refrigerator, comprising:
an outer cabinet;
an inner shelf carriage supporting a plurality of shelves and being movably arranged between a display position, where the shelves are accessible from a front side of the shelf carriage, a refill position, where the shelves are accessible from a rear side of the shelf carriage, and an intermediate position; and
a turning guide cooperating with the shelf carriage; wherein
the shelf carriage is at least substantially inside of the outer cabinet in the display position and at least substantially outside of and disconnected from the outer cabinet in the refill position and in the intermediate position;
the shelf carriage is arranged for turning motion between the intermediate position and the refill position; and wherein
the turning guide is adapted to guide the turning motion of the shelf carriage between the intermediate position and the refill position.

2. The refrigerator according to claim 1, wherein the turning guide is adapted to guide the shelf carriage to turn around a central axis of the shelf carriage.

3. The refrigerator according to claim 1 or 2, wherein the turning guide includes an axle and a pivotal bearing connected to the axle during the turning motion.

4. The refrigerator according to any claim 1 - 3, wherein the turning guide is provided with locking means for preventing turning of the shelf carriage.

5. The refrigerator according to any claim 1 - 4, further including a bearing arrangement, wherein the bearing arrangement is arranged to act on a bottom plate of the shelf carriage for facilitating the turning motion of the shelf carriage.

6. The refrigerator according to any claim 1 - 5, wherein the shelf carriage is arranged for linear translation between the display position inside of the outer cabinet and the disconnected intermediate position outside of the outer cabinet.

7. The refrigerator according to claim 6, wherein the linear translation of the shelf carriage is along a linear path aligned normal to the front side of the shelf carriage when the shelf carriage is in the display position.

8. The refrigerator according to claim 1 - 7, further comprising a guide plate carrying the shelf carriage, wherein the turning guide is arranged on the guide plate and connected to a bottom plate of the shelf carriage.

9. The refrigerator according to claim 8, wherein the turning guide includes an central axle which is pivotally received in a circular recess in the bottom plate of the shelf carriage.

10. The refrigerator according to claim 8 or 9, the guide plate is provided with wheels on a floor facing side thereof.

11. The refrigerator according to claims 7 and 10, wherein at least one wheel is non-pivoting and aligned in the direction of the linear path.

12. The refrigerator according to claim 10, wherein at least one wheel is adjustable between a retracted position in which the wheel engages with a bottom of the outer cabinet and an extended position in which the wheel engages with a floor.

13. The refrigerator according to any claim 1 - 7, wherein an extendable axle is pivotally arranged in a bottom plate of the shelf carriage, and wherein the axle is operable to project out of the bottom plate of the shelf carriage and to fixedly engage with a support surface, whereby the axle provides a rotational guide for the turning motion of the shelf carriage.

14. The refrigerator according to claim 13, wherein the axle, in an extended position, is adapted to carry part of the weight of the shelf carriage.
